# EUROPÄISCHE PATENTSCHRIFT

(11) **EP 1 810 306 B1**
(45) Veröffentlichungstag und Bekanntmachung des Hinweises auf die Patenterteilung: **16.01.2013**
(21) Anmeldenummer: 05815478.2
(22) Anmeldetag: 08.11.2005
(51) Int. Cl.: H01H 13/72, H01H 9/20, F16H 59/12

(54) **BETÄTIGUNGSEINRICHTUNG MIT TASTEN**
ACTUATING DEVICE COMPRISING KEYS
DISPOSITIF D'ACTIONNEMENT A TOUCHES

(30) Priorität: 11.11.2004 DE 102004054617
(43) Veröffentlichungstag der Anmeldung: 25.07.2007
(73) Patentinhaber: ZF Friedrichshafen AG, 88038 Friedrichshafen (DE)
(72) Erfinder: MEYER, Jörg, 49419 Wagenfeld (DE); GIEFER, Andreas, 49448 Lemförde (DE)
(86) Internationale Anmeldenummer: PCT/DE2005/002009
(87) Internationale Veröffentlichungsnummer: WO 2006/050703

(56) Entgegenhaltungen:
- EP-A- 1 251 297
- DE-A1- 3 025 174
- DE-A1- 10 260 168
- GB-A- 1 412 808
- US-A- 3 448 417
- US-A- 3 768 061
- PATENT ABSTRACTS OF JAPAN Bd. 017, Nr. 460 (E-1419), 23. August 1993 (1993-08-23) & JP 05 109336 A (MATSUSHITA ELECTRIC IND CO LTD), 30. April 1993 (1993-04-30)

## Beschreibung

Die Erfindung betrifft eine Einrichtung zur Betätigung eines technischen Systems mit einer Tastenanordnung gemäß dem Oberbegriff des Patentanspruchs 1.

Gattungsgemäße Betätigungseinrichtungen kommen beispielsweise, jedoch keineswegs ausschließlich, zur manuellen Auswahl von Schaltstufen bzw. Gangvorwahl bei Gangwechselgetrieben von Kraftfahrzeugen zum Einsatz.

Bei einer zunehmenden Anzahl von Kraftfahrzeugtypen erfolgt die Gangvorwahl bzw. Steuerung des Betriebszustands des Fahrzeuggetriebes heute mittels elektrischer bzw. elektronischer Signalübertragung. Eine dergestalt ohne mechanische Verbindung auskommende elektrische bzw. elektronische Ansteuerung technischer Systeme bzw. Getriebe bringt es jedoch mit sich, dass der Bediener bzw. Fahrer, im Gegensatz zur Bedienung mittels der bekannten mechanischen Betätigungseinrichtungen, im allgemeinen keinerlei unmittelbare Rückmeldung über die Ausführung seines Steuerbefehls, bzw. gegebenenfalls auch keine Rückmeldung über die mögliche Unzulässigkeit seines Betätigungswunsches erhält.

Bei Betätigungseinrichtungen mit Tasten und mit elektrischer bzw. elektronischer Signalübertragung kann es vielmehr vorkommen, dass das zu steuernde System bzw. Fahrzeuggetriebe nach dem Drücken einer der Tasten der Betätigungseinrichtung aus bestimmten Gründen den mit der gedrückten Taste assoziierten Betriebszustand nicht einnimmt. Dies bedeutet mit anderen Worten, dass der mittels Tastendruck angewählte Sollzustand des gesteuerten Systems, beispielsweise des Fahrzeuggetriebes, nicht mit dem tatsächlichen Schaltzustand des Systems bzw. Getriebes übereinstimmt. Eine derartige Divergenz zwischen dem tatsächlichen Betriebszustand eines technischen Systems und dem an den Steuertasten - vermeintlich - eingegebenen Steuerbefehl kann unterschiedliche Ursachen haben.

Im Beispielfall der Steuerung bzw. Gangvorwahl an einem automatischen Fahrzeuggetriebe sind mit automatischem Getriebe ausgestattete Kraftfahrzeuge häufig mit einer sog. Shiftlock-Funktion versehen. Bei einem Fahrzeug mit Shiftlock-Funktion können insbesondere die Schaltpositionen "D" und "R" aus der Neutralposition "N" heraus nur dann angewählt werden, wenn gleichzeitig die Fußbremse getreten ist. Dies dient der Sicherheit und soll verhindern, dass bei laufendem Motor, beispielsweise durch ungewolltes Anstoßen des Getriebewählhebels, eine Fahrstufe eingelegt wird und das Fahrzeug sich unkontrolliert in Bewegung setzt.

Bei einer elektrischen bzw. elektronischen Tastensteuerung eines shift-by-wire-Fahrzeuggetriebes, das mit einer Shiftlock-Funktion ausgestattet ist, könnte der Fahrer jedoch bei nicht getretener Fußbremse beispielsweise die Schaltposition "D" durch Drücken der entsprechenden Taste anwählen. Da jedoch im Beispielfall die Fußbremse nicht getreten ist, verbleibt das Getriebe wegen der Shiftlock-Funktion unverändert in der Neutralposition "N", wohingegen der Fahrer nach dem Drücken der Taste "D" der Ansicht ist, die entsprechende Fahrstufe sei nun eingelegt.

Im Ergebnis führt diese Situation zu einem potenziellen Sicherheitsrisiko, da in einem solchen Fall das Fahrzeug beispielsweise an einem Gefälle ungewollt rückwärts rollen kann, oder der Fahrer in dem falschen Glauben, die Vorwärtsfahrstufe eingelegt zu haben, eine Gefahrensituation nicht schnell genug verlassen kann.

Ferner kann beispielsweise auch eine fehlerhafte oder nicht funktionierende Übertragung der Steuerbefehle zwischen der Betätigungseinrichtung und dem damit gesteuerten System bzw. Fahrzeuggetriebe vorliegen, mit der Folge, dass die vom Fahrer an der Betätigungseinrichtung vorgewählte Getriebestufe vom System nicht erkannt und damit der entsprechende Steuerbefehl an das Getriebe nicht abgegeben wird.

Eine Gefahrensituation dieser Art ist im Fall der tastengesteuerten Betätigung eines Kraftfahrzeuggetriebes beispielsweise dann gegeben, wenn der Fahrer das Fahrzeug nach einer Fahrt mit eingelegter Fahrstufe "D" zum Stillstand bringt und bei laufendem Motor die Schaltposition "P" für Parksperre anwählt. Bei nicht funktionierender Signalübertragung zwischen Betätigungseinrichtung und Fahrzeuggetriebe bleibt dann jedoch die Vorwärtsfahrstufe "D" eingelegt, ohne dass die nicht funktionierende Signalübertragung dem Fahrer bei seinem Versuch, die Parksperre einzulegen, vermittelt würde. Verlässt der Fahrer nun im Glauben, die Parksperre eingelegt zu haben, das Fahrzeug, so setzt sich dieses wegen der tatsächlich noch eingelegten Getriebefahrstufe selbstständig in Bewegung.

Darüber hinaus zeigt die EP 1 251 297 A2 zeigt eine Betätigungseinrichtung für Automatikgetriebe mit mehreren Tasten, welche mit einer gemeinsamen Sperrvorrichtung blockierbar sind. Hierzu wird eine Brücke durch einen oder zwei Hubmagnete angetrieben. Einzeln sind die Tasten nicht blockierbar, sondern nur gemeinsam. Weiterhin werden die Tasten bei Ausfall der Hilfsenergie auch stets nur gemeinsam blockiert, da die Sperreinrichtung stets auf alle Tasten gemeinsam wirkt.

Ferner offenbart die JP 05-109336 A eine Tasteneinrichtung mit einer Taste innerhalb eines Tastenfeldes, welche mittels einer Sperreinrichtung zur mechanischen Blockierung der Taste. Zur Sperrung der Taste wird die Sperreinrichtung mit Hilfsenergie in form von Strom beaufschlagt, so dass ein Sperrschieber unter einen Vorsprung der Taste ausfährt und diese blockiert. Bei Ausfall der Hilfsenergie ist der Sperrschieber eingefahren, so dass die Taste nicht blockiert ist.

Das Dokument US 3 448 417 offenbart eine Betätigungseinrichtung gemäβ dem Oberbegriff von Anspruch 1.

Es ist mit diesem Hintergrund Aufgabe der vorliegenden Erfindung, eine Einrichtung zur tastengesteuerten elektrischen bzw. elektronischen Betätigung eines technischen Systems, beispielsweise eines Gangwechselgetriebes zu schaffen, mit der sich die genannten Nachteile des Standes der Technik überwinden lassen. Insbesondere soll die Betätigungseinrichtung eine eindeutige taktile Rückmeldung des Systemzustands bzw. Schaltvorgangs beim Drücken der Tasten ermöglichen. Ferner soll auch die Gefahr von für den Bediener nicht erkennbaren Systemzuständen im Fall von unzulässigen Schaltanforderungen bzw. Fehlbetätigungen, im Fall von Defekten am System bzw. im Fall nicht funktionierender Signalübertragung zwischen Betätigungseinrichtung und System beseitigt werden.

Diese Aufgabe wird durch eine Betätigungseinrichtung mit den Merkmalen des Patentanspruchs 1 gelöst. Bevorzugte Ausführungsformen sind Gegenstand der Unteransprüche.

Die erfindungsgemäße Betätigungseinrichtung umfasst in an sich zunächst bekannter Weise eine Tastenanordnung mit mehreren Tasten. Ferner weist die Betätigungseinrichtung Mittel zur Erzeugung elektrischer Steuersignale für die Übertragung eines Schaltbefehls an das gesteuerte technische System auf. Erfindungsgemäß zeichnet sich die Betätigungseinrichtung jedoch dadurch aus, dass allen vorhandenen Tasten, eine separat steuerbare Sperreinrichtung zur mechanischen Blockierung der Taste zugeordnet ist. Die Sperreinrichtung ist dabei mittels Hilfsenergie antreibbar.

Dies bedeutet mit anderen Worten, dass die zur Betätigung des technischen Systems dienende Taste, bzw. die Mehrzahl an Tasten einer Tastenanordnung zur Steuerung des technischen Systems, einzeln mittels jeweils einer Sperreinrichtung blockierbar ist.

Auf diese Weise werden die eingangs beschriebenen Probleme bei der Steuerung von technischen Systemen mittels elektrischer bzw. elektronischer Signale, beispielsweise bei elektronisch gesteuerten Automatikgetrieben, beseitigt.

Denn auf Grund der einzelnen Blockierbarkeit der Tasten der Betätigungseinrichtung können beispielsweise Schaltanforderungen, die auf Grund des momentanen Systemzustands unzulässig sind, nicht wie im Stand der Technik lediglich dadurch blockiert werden, dass derartige unzulässigen Schaltanforderungen einfach vom System ignoriert werden. Vielmehr kann dem Bediener bzw. Fahrer eines Kraftfahrzeugs dank der einzelnen Blockierbarkeit der Tasten sofort und unmittelbar taktil signalisiert werden, dass die von ihm gewünschte Schaltanforderung derzeit nicht zur Verfügung steht bzw. vom System momentan nicht umgesetzt werden kann.

Ebenso kann beispielsweise bei einem Totalausfall des gesteuerten Systems, oder beim Ausfall der Signalübertragung von der Betätigungseinrichtung zum gesteuerten System, dank der steuerbaren Sperreinrichtung eine Blockierung der Taste, bzw. gegebenenfalls sämtlicher Tasten der Betätigungseinrichtung erfolgen. Damit wird dem Bediener bzw. Fahrer unmissverständlich signalisiert, dass derzeit eine Steuerung des Systems bzw. eine Betätigung des Automatikgetriebes nicht möglich ist. Auf diese Weise lassen sich die eingangs geschilderten Gefahrensituationen mit großer Sicherheit vermeiden.

Die Erfindung wird unabhängig davon verwirklicht, wie die Sperreinrichtung konstruktiv ausgeführt und im Bereich der Tastenanordnung angeordnet ist, solange mit der Sperreinrichtung eine zuverlässige Sperrung der entsprechenden Taste sichergestellt ist.

Erfindungsgemäß ist die Sperreinrichtung weiterhin so ausgebildet, dass die jeweilige Taste im Falle nicht vorhandener Hilfsenergie zum Betrieb der Sperreinrichtung blockiert ist. Dies bedeutet mit anderen Worten, dass das Entsperren der jeweiligen Taste durch Anlegen der Hilfsenergie erfolgt, wohingegen die Taste im Sinne eines 'Fail-Safe System' bei einem etwaigen Ausfall der Hilfsenergie automatisch gesperrt ist.

Art und Herkunft der Hilfsenergie sind erfindungsgemäß nicht wesentlich. Gemäß einer bevorzugten Ausführungsform der Erfindung ist jedoch die Sperreinrichtung elektrisch betätigt, vorzugsweise mittels eines Elektromagneten. Auf diese Weise lässt sich die aktiv gesteuerte Sperrung der Taste einfach, kostengünstig und konstruktiv robust realisieren.

Gemäß der Erfindung lässt sich die Taste durch die Sperreinrichtung in der erhabenen, also nicht gedrückten Tastenstellung blockieren. Auf diese Weise lässt sich eine unmittelbare taktile Rückmeldung für den Bediener realisieren, indem beim Versuch, eine gesperrte Taste zu drücken, der Widerstand der Sperreinrichtung spürbar wird.

Nach einer weiteren Ausführungsform der Erfindung umfassen die in der Betätigungseinrichtung vorhandenen Mittel zur Erzeugung der elektrischen Steuersignale eine Schalteinrichtung, wobei im Sinne der Zuverlässigkeit der Betätigungseinrichtung vorzugsweise jeder Taste eine eigene Schalteinrichtung mit einem Signalgeber zugeordnet ist.

Gemäß einer weiteren bevorzugten Ausführungsform der Erfindung umfasst dabei die einer Taste zugeordnete Schalteinrichtung mehr als einen Signalgeber, vorzugsweise zwei bzw. vier bevorzugt parallel angeordnete Signalgeber.

Die Verwendung von zwei Signalgebern je Taste besitzt den Vorteil, dass im Sinne einer erhöhten Ausfallsicherheit bzw. Redundanz damit bereits die als sog. Einfachfehler bezeichneten Ausfälle einer Schalteinrichtung erkannt werden können. Denn beim Ausfall eines der beiden Signalgeber einer Taste werden so im einwandfreien Betrieb nicht zulässige bzw. nicht vorkommende unterschiedliche Zustände der beiden Signalgeber erkannt. Allerdings ist mit zwei Signalgebern pro Taste noch nicht erkennbar, welcher der beiden Signalgeber ausgefallen ist bzw. welcher der beiden Signalgeber dann den der Tastenposition entsprechenden richtigen Zustand meldet. Damit ist mit zwei Signalgebern je Taste zwar die nicht korrekt funktionierende Taste, nicht aber deren tatsächlicher Schaltzustand identifizierbar.

Werden vier Signalgeber je Taste verwendet, so können sowohl Einfachfehler erkannt als auch gleichzeitig noch die momentane Tastenposition ermittelt werden, da selbst beim Ausfall eines Signalgebers immer noch drei Signalgeber einen untereinander identischen Wert annehmen und damit trotz des einen ausgefallenen Signalgebers ein sicheres Indiz für den tatsächlichen Tastenzustand liefern. Die - allerdings sehr viel unwahrscheinlicheren - sog. Zweifachfehler können mit vier Signalgebern zwar ebenfalls erkannt werden, jedoch ist analog des Einfachfehlers bei zwei vorhandenen Signalgebern je Taste, in diesem äußerst seltenen Fall der tatsächliche Schaltzustand der Taste nicht mehr identifizierbar.

Es ist dabei zunächst nicht erheblich, nach welchem Funktionsprinzip der zumindest eine Signalgeber konkret arbeitet, solange eine genügende Zahl an Schaltspielen wie auch eine ausreichende Robustheit und Vibrationsbeständigkeit gegeben ist. Gemäß einer bevorzugten Ausführungsform der Erfindung ist der Signalgeber jedoch als Mikroschalter ausgebildet.

Die Verwendung von Mikroschaltern ist insofern vorteilhaft, als diese in Form kostengünstiger und robuster Standardbauteile vorliegen, und zudem eine äußerst hohe Anzahl an Schaltspielen wartungsfrei ertragen.

Gemäß weiterer bevorzugter Ausführungsformen der Erfindung werden die aus dem Bereich der Eingabetastaturen bekannten, besonders kostengünstigen und robusten Schaltmatten, bzw. je nach Anforderungsprofil auch magnetisch arbeitende Hall-Sensoren oder optische Sensoren als Signalgeber verwendet.

Nach einer weiteren Ausführungsform der vorliegenden Erfindung umfasst die Betätigungseinrichtung ferner eine Vorrichtung zur mechanischen Entriegelung der Sperreinrichtung. Diese Entriegelungsvorrichtung steht als sog. Override-Funktion für den Fall von Fehlfunktionen des Antriebs der Sperreinrichtung zur Verfügung. Die Entriegelungsvorrichtung ermöglicht somit in Form einer manuellen mechanischen Entsperrung der Sperreinrichtung, beispielsweise bei Ausfall der Sperreinrichtung, dass das Betätigungselement dennoch im Sinne eines Notbetriebs betätigt werden kann.

Im Folgenden wird die Erfindung anhand lediglich Ausführungsbeispiele darstellender Zeichnungen näher erläutert. Dabei zeigt:
- **Fig. 1**: in schematischer isometrischer Darstellung eine Ausführungsform einer Betätigungseinrichtung für ein Fahrzeuggetriebe;
- **Fig. 2**: in schematischer Schnittdarstellung die Betätigungseinrichtung gemäß Fig. 1 im Querschnitt entlang einer der Tasten;
- **Fig. 3**: in einer **Fig. 1** entsprechenden Darstellung die Betätigungseinrichtung gemäß **Fig. 1** und **2** bei ausgeblendetem Gehäuse mit Blickrichtung auf die Sperreinrichtung; und
- **Fig. 4**: in einer **Fig. 3** entsprechenden Darstellung und Ansicht die Betätigungseinrichtung gemäß **Fig. 1** bis **3** mit Blickrichtung auf die elektrischen Signalgeber.

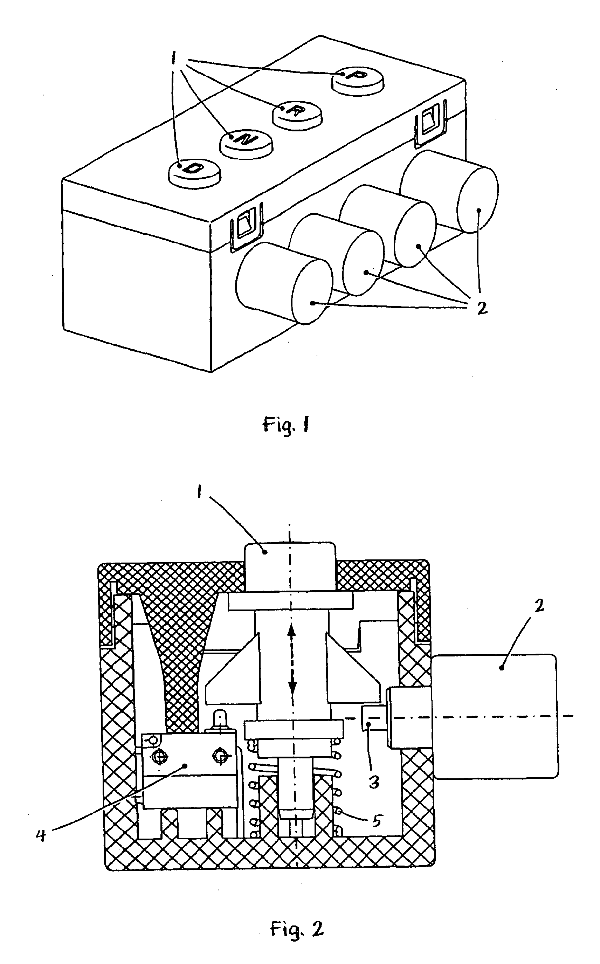

**Fig.1** zeigt in isometrischer Darstellung eine Ausführungsform einer erfindungsgemäßen Betätigungseinrichtung. Bei dieser Ausführungsform handelt es sich um eine Betätigungseinrichtung für ein automatisches Fahrzeuggetriebe.

Man erkennt in der Darstellung von **Fig. 1** zunächst einmal vier Drucktasten 1, die den vier anwählbaren Fahrstufen "P", "R", "N" und "D" eines Automatikgetriebes zugeordnet sind. Die Auswahl einer der Fahrstufen erfolgt dabei durch Drücken der entsprechenden Taste 1.

Außerdem weist die Betätigungseinrichtung gemäß **Fig. 1** jedoch vier Elektromagnete 2 auf, wobei jeder der Tasten "P", "R", "N" und "D" ein Elektromagnet 2 zugeordnet ist. Dabei dienen die Elektromagnete 2 jeweils zur Betätigung der Sperreinrichtung der einzelnen Tasten "P", "R", "N" und "D".

Aufbau und Funktionsweise der Sperreinrichtung gehen aus der Schnittdarstellung gemäß **Fig. 2** hervor. Man erkennt zunächst wieder eine der Tasten 1 sowie den dieser Taste 1 zugeordneten Elektromagneten 2. Die Taste 1 ist in **Fig. 2** in der nicht gedrückten, erhabenen Stellung dargestellt, in der sie im ansonsten kräftefreien Zustand durch die Schraubenfeder 5 gehalten wird. Der Elektromagnet 2 weist einen nicht dargestellten, beweglichen Anker auf, der mit einem Sperrstift 3 verbunden ist. Magnetspule und Anker des Elektromagneten 2 sind dabei so angeordnet, dass Anker und Sperrstift 3 bei Stromfluss durch die (nicht dargestellte) Spule des Elektromagneten 2 zeichnungsbezogen nach rechts bewegt werden, während Anker und Sperrstift 3 sich auf Grund einer (ebenfalls nicht dargestellten) Feder im stromlosem Zustand des Elektromagneten 2 zeichnungsbezogen stets in ihrer linken Endstellung befinden.

Dies bedeutet mit anderen Worten, dass die Taste 1 im stromlosen Zustand des Elektromagneten 2 aufgrund des ausgefahrenen Sperrstifts 3 blockiert ist und daher vom Fahrer nicht eingedrückt werden kann. Dies führt gleichzeitig dazu, dass auch der Mikroschalter 4 nicht betätigt werden kann, und somit auch kein elektrisches Schaltsignal erzeugt und an das Fahrzeuggetriebe übertragen werden kann.

Sobald jedoch eine Steuerschaltung der Betätigungseinrichtung bzw. die Getriebesteuerung die Taste 1 bzw. die damit anwählbare Getriebefahrstufe freigibt, wird elektrische Spannung auf den Elektromagneten 2 gegeben, wodurch Anker und Sperrstift 3 sich zeichnungsbezogen nach rechts bewegen und somit für die Drucktaste 1 den Weg nach unten freigeben.

Der Fahrer kann die entsprechende Drucktaste 1 nun niederdrücken, wodurch der Mikroschalter 4 betätigt, ein entsprechendes elektrisches Signal erzeugt, und an das Fahrzeuggetriebe bzw. an die Getriebesteuerung übermittelt wird.

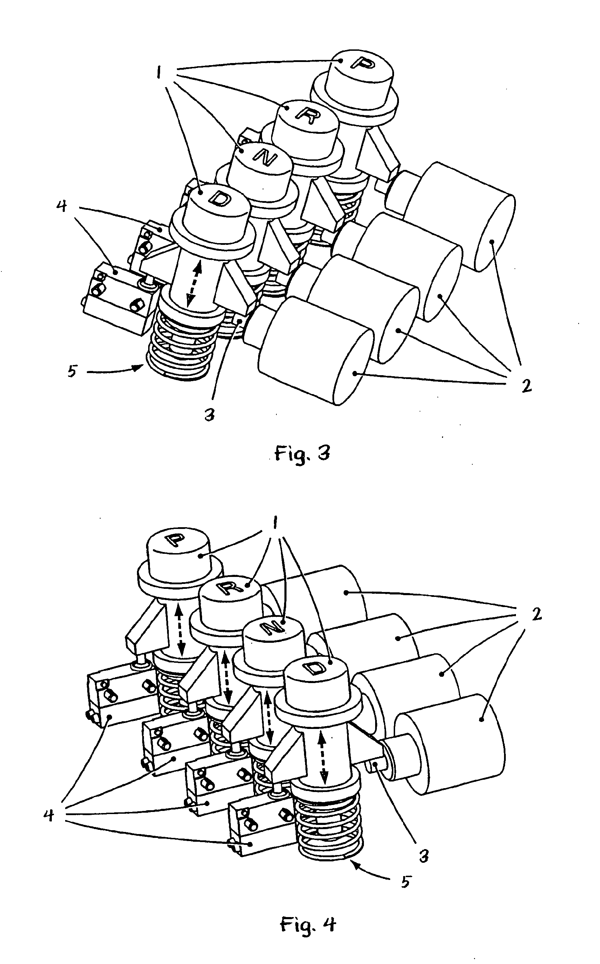

**Fig.** 3 und **4** zeigen in isometrischer Darstellung und aus unterschiedlichen Blickwinkeln nochmals den gesamten Mechanismus der Betätigungseinrichtung gemäß **Fig. 1** und 2, wobei in der Darstellung der **Fig. 3** und **4** jeweils das Gehäuse ausgeblendet wurde.

Man erkennt deutlich, dass jeder Taste 1 ein Elektromagnet 2 mit Sperrstift 3, sowie jeweils ein Mikroschalter 4 und eine Rückstellfeder 5 zugeordnet ist. Aus den **Fig. 3** und **4** geht auch insbesondere der einfache und äußerst robuste Aufbau der erfindungsgemäßen Betätigungseinrichtung hervor, der insgesamt nur eine geringe Anzahl einfach aufgebauter Grundelemente umfasst. Dies kommt einer kostengünstigen Produktion, einer entsprechend hohen Betriebssicherheit und langen Lebensdauer der Betätigungseinrichtung mit Vorteil entgegen.

In der unten stehenden Tabelle ist ferner ein Beispiel für eine Schaltlogik dargestellt, die dem Ausführungsbeispiel der Betätigungseinrichtung gemäß **Fig. 1** bis **4** zugeordnet werden kann.

Dabei stehen die in der linken Spalte (Spalte 1) grau unterlegten Felder für die momentan eingelegte Getriebefahrstufe "P", "R", "N" oder "D", während in den Spalten 2 und 3 das Vorliegen weiterer Randbedingungen ("*Bremse getreten*", bzw. "*Fahrzeuggeschwindigkeit oberhalb einer festgelegten Grenzgeschwindigkeit*") eingetragen ist.

Den Spalten 4 bis 7 kann sodann der einer Kombination aus Randbedingungen gemäß den Spalten 1 bis 3 jeweils zugeordnete Zustand der Sperreinrichtungen der einzelnen Tasten entnommen werden. So sind beispielsweise bei eingelegter Neutralstellung "N" und gleichzeitig getretener Bremse (Zeile 6) alle vier Tasten "P", "R", "N" und "D" frei betätigbar, da beim Vorliegen dieser Randbedingungen eine beliebige Getriebefahrstufe eingelegt werden darf. Ist die Bremse bei eingelegter Neutralstellung "N" jedoch nicht getreten, so kann aus Gründen der Sicherheit nicht aus der Neutralstellung "N" herausgeschaltet und eine der Fahrstufen "P", "R", oder "D" eingelegt werden (Zeile 5).

Beim Auftreten eines Fehlers im Bereich des Getriebes oder der Getriebesteuerung werden hingegen sämtliche Tasten gesperrt, um dem Fahrer auch taktil den Störungszustand zu signalisieren (Zeile 9).

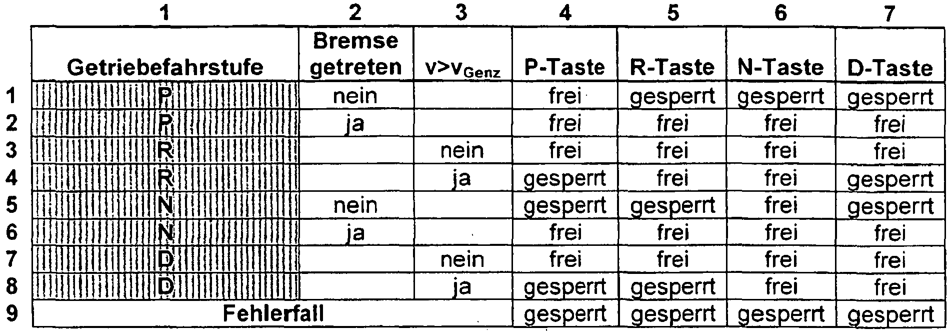

Im Ergebnis wird damit deutlich, dass dank der Erfindung eine Betätigungseinrichtung für elektrisch bzw. elektronisch gesteuerte technische Systeme, insbesondere für Gangwechselgetriebe von Kraftfahrzeugen geschaffen wird, die eine besonders sichere und fehlerarme Betätigung des technischen Systems bzw. Fahrzeuggetriebes ermöglicht. Beim Kraftfahrzeug wird damit im Sinne der Betriebs- und Fahrsicherheit die Anwahl insbesondere von unzulässigen Schaltfolgen bzw. Betriebszuständen verhindert, und die Unzulässigkeit oder Unmöglichkeit einer entsprechenden Schaltanforderung wird dem Bediener bzw. Fahrer taktil und/oder optisch klar signalisiert.

Die Erfindung leistet damit einen wesentlichen Beitrag zur Verbesserung der Sicherheit, Ergonomie und Bedienbarkeit von technischen Systemen, insbesondere bei der Anwendung der Erfindung im Bereich der Kraftfahrzeuggetriebe.

### Bezugszeichenliste

- 1: Drucktaste
- 2: Elektromagnet
- 3: Sperrstift
- 4: Mikroschalter
- 5: Schraubenfeder

## Patentansprüche

1. Betätigungseinrichtung für ein technisches System zur Auswahl von Schaltstufen eines shift-by-wire-Gangwechselgetriebes, die Betätigungseinrichtung umfassend eine Tastenanordnung mit mehreren Tasten (1) sowie Mittel (4) zur Erzeugung elektrischer Steuersignale, zur Übertragung an das technische System, wobei jeder Taste (1) eine separat steuerbare Sperreinrichtung (2, 3) zur mechanischen Blockierung der Taste (1) zugeordnet ist, wobei die Sperreinrichtung (2, 3) mittels Hilfsenergie antreibbar ist und die Sperreinrichtung (2, 3) sich bei Nichtvorliegen von Hilfsenergie im Blockierzustand befindet, **dadurch gekennzeichnet, dass** die Taste (1) mittels der im Blockierzustand befindlichen Sperreinrichtung (2, 3) in der erhabenen Tastenstellung blockierbar ist.

2. Betätigungseinrichtung nach Anspruch 1 ,**dadurch gekennzeichnet, dass** die Sperreinrichtung (2, 3) elektrisch betätigbar ist.

3. Betätigungseinrichtung nach einem der Ansprüche 1 oder 2,
**dadurch gekennzeichnet, dass** die Sperreinrichtung (2, 3) elektromagnetisch betätigbar ist.

4. Betätigungseinrichtung nach einem der vorherigen Ansprüche, **dadurch gekennzeichnet, dass** die Taste (1) in Richtung der erhabenen Tastenstellung federbelastet ist.

5. Betätigungseinrichtung nach einem der Ansprüche 1 bis 4, **dadurch gekennzeichnet, dass** die Mittel zur Erzeugung elektrischer Steuersignale eine Schalteinrichtung umfassen.

6. Betätigungseinrichtung nach Anspruch 5, **dadurch gekennzeichnet, dass** jeder Taste (1) eine Schalteinrichtung mit zumindest einem Signalgeber (4) zugeordnet ist.

7. Betätigungseinrichtung nach Anspruch 5 oder 6, **dadurch gekennzeichnet, dass** die einer Taste (1) zugeordnete Schalteinrichtung zwei Signalgeber (4) umfasst.

8. Betätigungseinrichtung nach Anspruch 5 oder 6, **dadurch gekennzeichnet, dass** die einer Taste (1) zugeordnete Schalteinrichtung vier Signalgeber (4) umfasst.

9. Betätigungseinrichtung nach einem der Ansprüche 6 bis 8, **dadurch gekennzeichnet, dass** der Signalgeber (4) als Mikroschalter ausgebildet ist.

10. Betätigungseinrichtung nach einem der Ansprüche 6 bis 8, **dadurch gekennzeichnet, dass** der Signalgeber (4) als Schaltmatte ausgebildet ist.

11. Betätigungseinrichtung nach einem der Ansprüche 6 bis 8, **dadurch gekennzeichnet, dass** der Signalgeber (4) als Hall-Sensor ausgebildet ist.

12. Betätigungseinrichtung nach einem der Ansprüche 6 bis 8, **dadurch gekennzeichnet, dass** der Signalgeber (4) als optischer Sensor ausgebildet ist.

13. Betätigungseinrichtung nach einem der Ansprüche 1 bis 12, **dadurch gekennzeichnet, dass** die Betätigungseinrichtung eine mechanische Entriegelungsvorrichtung zur Überwindung der Sperreinrichtung (2, 3) umfasst.

## Claims

1. Actuating device for a technical system for selecting shift stages of a shift-by-wire gearbox, the actuating device comprising a key arrangement having a plurality of keys (1) as well as means (4) for generating electrical control signals and for the purpose of transmission to the technical system, wherein each key (1) is assigned a separately controllable locking device (2, 3) for mechanically locking the key (1), wherein the locking device (2, 3) can be driven by means of auxiliary energy, and the locking device (2, 3) is in the locked state when auxiliary energy is not present, **characterized in that** the key (1) can be locked in the raised key position by means of the locking device (2, 3) in the locked state.

2. Actuating device according to Claim 1, **characterized in that** the locking device (2, 3) can be actuated electrically.

3. Actuating device according to one of Claims 1 or 2, **characterized in that** the locking device (2, 3) can be actuated electromagnetically.

4. Actuating device according to one of the preceding claims, **characterized in that** the key (1) is springloaded in the direction of the raised key position.

5. Actuating device according to one of Claims 1 to 4, **characterized in that** the means for generating electrical control signals comprise a switching device.

6. Actuating device according to Claim 5, **characterized in that** each key (1) is assigned a switching device having at least one signal generator (4).

7. Actuating device according to Claim 5 or 6, **characterized in that** the switching device which is assigned to a key (1) comprises two signal generators (4).

8. Actuating device according to Claim 5 or 6, **characterized in that** the switching device which is assigned to a key (1) comprises four signal generators (4).

9. Actuating device according to one of Claims 6 to 8, **characterized in that** the signal generator (4) is embodied as a microswitch.

10. Actuating device according to one of Claims 6 to 8, **characterized in that** the signal generator (4) is embodied as a switching mat.

11. Actuating device according to one of Claims 6 to 8, **characterized in that** the signal generator (4) is embodied as a Hall sensor.

12. Actuating device according to one of Claims 6 to 8, **characterized in that** the signal generator (4) is embodied as an optical sensor.

13. Actuating device according to one of Claims 1 to 12, **characterized in that** the actuating device comprises a mechanical unlocking device for overcoming the locking device (2, 3).

## Revendications

1. Dispositif d'actionnement pour un système technique pour sélectionner des étages de commutation d'une boîte de vitesses à commande électrique, le dispositif d'actionnement comprenant un agencement à touches avec plusieurs touches (1) ainsi que des moyens (4) pour produire des signaux de commande électriques, pour le transfert au système technique, à chaque touche (1) étant associé un dispositif de blocage (2, 3) commandable séparément pour le blocage mécanique de la touche (1), le dispositif de blocage (2, 3) pouvant être entraîné par une énergie auxiliaire et le dispositif de blocage (2, 3) se trouvant dans l'état bloqué en l'absence d'énergie auxiliaire, **caractérisé en ce que** la touche (1) peut être bloquée dans la position de touche levée au moyen du dispositif de blocage (2, 3) se trouvant dans l'état bloqué.

2. Dispositif d'actionnement selon la revendication 1, **caractérisé en ce que** le dispositif de blocage (2, 3) peut être actionné électriquement.

3. Dispositif d'actionnement selon l'une quelconque des revendications 1 ou 2, **caractérisé en ce que** le dispositif de blocage (2, 3) peut être actionné électromagnétiquement.

4. Dispositif d'actionnement selon l'une quelconque des revendications précédentes, **caractérisé en ce que** la touche (1) est sollicitée par ressort dans la direction de la position de touche levée.

5. Dispositif d'actionnement selon l'une quelconque des revendications 1 à 4, **caractérisé en ce que** les moyens pour générer des signaux de commande électriques comprennent un dispositif de commutation.

6. Dispositif d'actionnement selon la revendication 5, **caractérisé en ce qu'**à chaque touche (1) est associé un dispositif de commutation comprenant au moins un générateur de signaux (4).

7. Dispositif d'actionnement selon la revendication 5 ou 6, **caractérisé en ce que** le dispositif de commutation associé à une touche (1) comprend deux générateurs de signaux (4).

8. Dispositif d'actionnement selon la revendication 5 ou 6, **caractérisé en ce que** le dispositif de commutation associé à une touche (1) comprend quatre générateurs de signaux (4).

9. Dispositif d'actionnement selon l'une quelconque des revendications 6 à 8, **caractérisé en ce que** le générateur de signaux (4) est réalisé sous forme de minirupteur.

10. Dispositif d'actionnement selon l'une quelconque des revendications 6 à 8, **caractérisé en ce que** le générateur de signaux (4) est réalisé sous forme de natte de commutation.

11. Dispositif d'actionnement selon l'une quelconque des revendications 6 à 8, **caractérisé en ce que** le générateur de signaux (4) est réalisé sous forme de capteur de Hall.

12. Dispositif d'actionnement selon l'une quelconque des revendications 6 à 8, **caractérisé en ce que** le générateur de signaux (4) est réalisé sous forme de capteur optique.

13. Dispositif d'actionnement selon l'une quelconque des revendications 1 à 12, **caractérisé en ce que** le dispositif d'actionnement comprend un dispositif de déverrouillage mécanique pour débloquer le dispositif de blocage (2, 3).
